# EUROPÄISCHE PATENTSCHRIFT

(11) **EP 0 989 250 B1**
(45) Veröffentlichungstag und Bekanntmachung des Hinweises auf die Patenterteilung: **10.04.2002**
(21) Anmeldenummer: 99115937.7
(22) Anmeldetag: 13.08.1999
(51) Int. Cl.: E04B 1/58, F16B 21/09

(54) **Vorrichtung zum Verbinden von zwei Profilen**
Device for joining two structural members
Moyen de liaison de deux profilés

(30) Priorität: 28.08.1998 DE 29815505 U
(43) Veröffentlichungstag der Anmeldung: 29.03.2000
(73) Patentinhaber: SCHÜCO International KG, 33609 Bielefeld (DE)
(72) Erfinder: Höcker, Eitel-Friedrich, 33739 Bielefeld (DE)
(74) Vertreter: Stracke, Alexander, Dipl.-Ing.

(56) Entgegenhaltungen:
- EP-A- 0 615 072
- DE-A- 4 306 877
- DE-U- 29 510 151
- GB-A- 1 272 750

## Beschreibung

Die Erfindung bezieht sich auf eine Vorrichtung zum Verbinden eines mit einem Auflagerschenkel versehenen Profilträgers, der ein Wandanschlußprofil oder ein Traufenprofil einer Dachkonstruktion sein kann, mit einem aufgelagerten Profil, z.B. einem Sparrenprofil, wobei der Auflagerschenkel eine hinterschnittene, einen mehrteiligen Verbinder aufnehmende Nut aufweist.

Es ist eine Vorrichtung zum Verbinden eines L-förmigen Traufenprofils einer Dachkonstruktion mit einem Sparrenprofil bekannt (EP 0 615 072), bei der der untere waagerechte Schenkel des Traufenprofils eine hinterschnittene Aufnahmenut für einen Verbinder aufweist. Der Verbinder ist mit einer quer zu seiner Längsachse sich erstreckenden, mittigen Bohrung versehen, die zum Einführen eines Bundbolzens dient, der am Sparrenprofil festgelegt ist und somit getrennt vom Verbinder montiert wird. Von der mittigen Bohrung des Verbinders erstrecken sich unter einem Winkel zur Längsachse des Verbinders Nuten; die mit dem vertikalen Schenkel des Traufenprofils einen spitzen Winkel bilden. Ferner ist die Unterseite des Verbinders quer zu seiner Längsachse geneigt ausgebildet. Durch einseitiges Verschieben des Verbinders unter gleichzeitigem Festhalten des Sparrenprofiles in seiner zukünftigen Montagelage stützt sich der Schaft des Bundbolzens an der schrägverlaufenden Längsnut ab, während der das untere Ende des Bundbolzens bildende Bund die unteren Längsränder der Längsnut untergreift. Durch eine Verschiebung des Verbinders in Längsrichtung wird einerseits die vertikale Stirnfläche des Sparrenprofils gegen den vertikalen Schenkel des Traufenprofils gepreßt und andererseits aufgrund des Zusammenwirkens des Bundes des Bundbolzens mit der Schrägfläche an der Unterseite des Verbinders das Sparrenprofil auf den horizontalen Auflagerschenkel des Traufenprofils gepreßt.

Diese Ausführung hat den Nachteil, daß zwei schräge Flächen miteinander korrespondieren müssen, um die in zwei Ebenen gerichteten Anzugskräfte zu erzeugen. Die bei der Herstellung und Montage entstehenden Toleranzen der Schrägflächen an dem Verbinder, die Toleranzen an den Profilen und dem Bundbolzen stellen eine einwandfreie Festlegung des Sparrenprofils in Frage. Der größte Nachteil liegt jedoch darin, daß der formschlüssig in die hinterschnittene Nut des Auflagerschenkels des Traufenprofils einliegende Verbinder mittels Hammerschläge bewegt werden muß und daß bei der Montage das Traufenprofil durch diese Schlagbeanspruchungen des Verbinders seine exakte Montageposition nicht erreicht, so daß hier ein Nachrichten des Sparrenprofils mit allen Risiken der Oberflächenbeschädigung der in der Regel beschichteten Profile erforderlich wird.

Der Erfindung liegt die Aufgabe zugrunde, eine Verbindungsvorrichtung der eingangs genannten Art so zu gestalten, daß ihre Funktionsteile als Baueinheit zusammengestellt sind und als Baueinheit montiert werden und ein separates Ausrichten in der hinterschnittenen Nut des Profilträgers überflüssig wird, daß sie gegenüber Toleranzen unempfindlicher ist und eine sichere Festlegung der Sparrenprofile ermöglicht.

Diese Aufgabe wird erfindungsgemäß dadurch gelöst, daß der mehrteilige Verbinder eine Montageeinheit bildet, die mittels eines Achsbolzens an dem aufgelagerten Profil (Sparrenprofil) festgelegt in die Nut des Auflagerschenkels einführbar ist und eine Verbinderplatte aufweist, die zu dem Achsbolzen bis zu einer Anlage verschiebbar und um ein achsbolzenfestes Bauteile kippbar oder um den Achsbolzen drehbar ist und in der Verriegelungsstellung mindestens eine hinterschnittene Fläche der Nut hintergreift.

In der Verriegelungsstellung preßt die Verbinderplatte im Zusammenwirken mit dem Achsbolzen das aufgelagerte Profil (Sparrenprofil) auf den Auflagerschenkel und die Stirnseite des Profils gegen den vertikal zum Auflagerschenkel sich erstreckenden Anlageschenkel des Profilträgers.

Weitere Merkmale der Erfindung ergeben sich aus den Unteransprüchen und der folgenden Beschreibung zweier erfindungsgemäßer Ausführungsbeispiele, die in den Zeichnungen dargestellt sind.

Es zeigen:
- Figur 1: einen im Querschnitt L-förmigen Profilträger mit zugeordnetem Sparrenprofil,
- Figur 2: die Verbindungsvorrichtung in der Verriegelungsstellung,
- Figur 3: einen Schnitt nach der Linie A-B in Fig. 2,
- Figur 4: die Verbindungsvorrichtung in verschiedenen Montageschritten,
- Figur 5: den Kräfteverlauf und die Wirkweise der Verbindungsvorrichtung,
- Figur 6: ein zweites Ausführungsbeispiel mit in die hinterschnittene Nut des Profilträgers eindrehbarer Verbinderplatte,
- Figur 7: drei Montagestellungen der Verbinderplatte,
- Figur 8: die Verbindungsvorrichtung zwischen dem Profilträger und dem Sparrenprofil in der Verriegelungsstellung, und zwar im Schnitt, und
- Figur 9: einen der Figur 8 entsprechenden Grundriß mit eingesetztem, winkelförmigem Montageschlüssel zur Lagesicherung der Verbinderplatte.

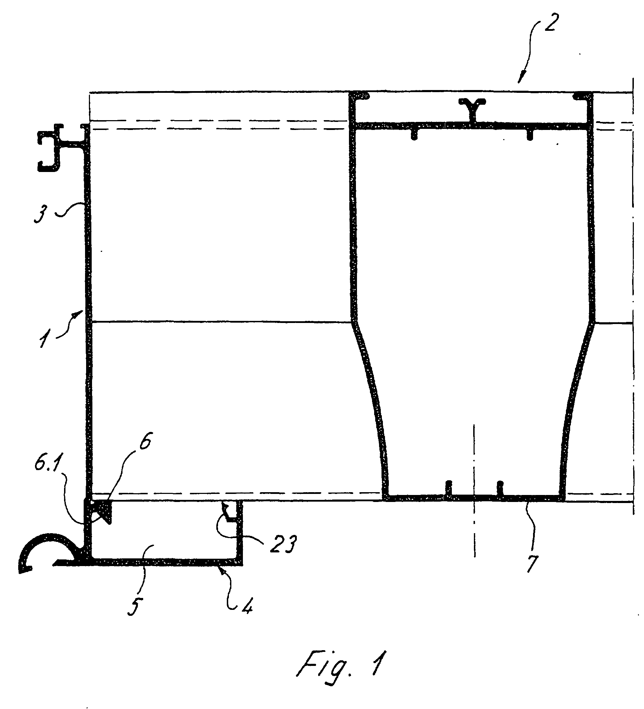

In der Fig. 1 ist ein L-förmiger Profilträger 1 dargestellt, der im Wandanschlußbereich oder im Traufenbereich einer Dachkonstruktion angeordnet werden kann, dem ein Sparrenprofil 2 zugeordnet ist, das am vertikalen Anlageschenkel 3 des Trägerprofis anliegt und sich auf dem horizontalen Auflageschenkel 4 abstützt. Dieser Auflageschenkel ist als hinterschnittene Nut 5 ausgebildet, die an der dem Anlageschenkel 3 zugewandten Seite als Randsteg einen Prismensteg 6 aufweist, der an der dem Nutboden zugewandten Seite mit einer Schrägfläche 6.1 versehen ist.

Der anderen Randleiste ist das Bezugszeichen 23 zugeordnet.

Durch die erfindungsgemäße Verbindungsvorrichtung, die mittels eines Achsbolzens 8 am Boden 7 des Sparrenprofils 2 festgelegt wird, wird eine Verbindung geschaffen, bei der die Stirnfläche des Sparrenprofils 2 gegen den Anlageschenkel 3 und gegen den Auflageschenkel 4 gepreßt wird. Dieser Kraftschluß wird erreicht durch das Zusammenwirken einer Verbinderplatte mit einer oder beiden Randleisten der hinterschnittenen Nut 5.

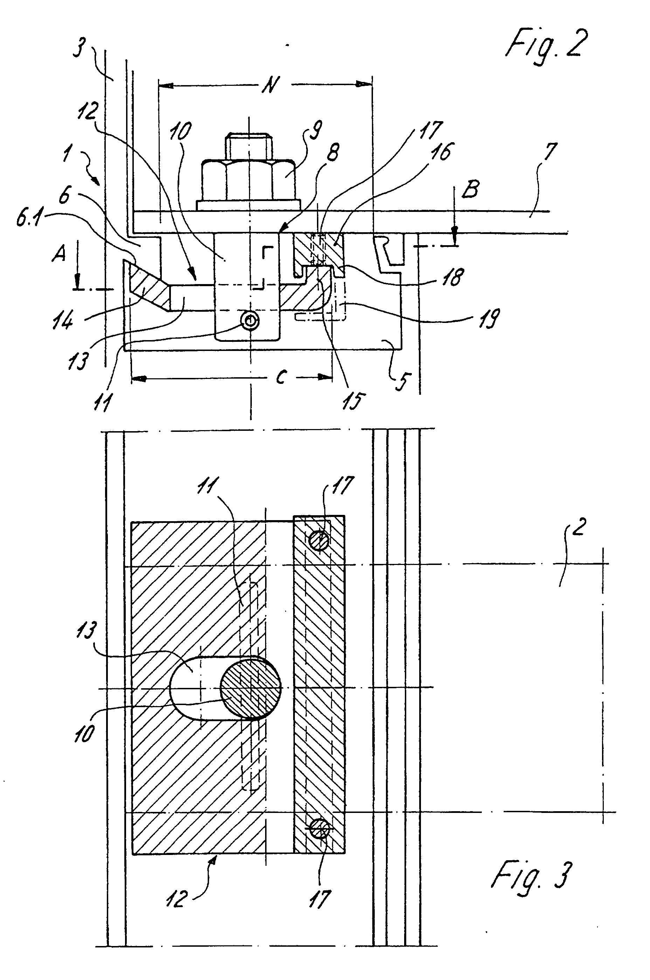

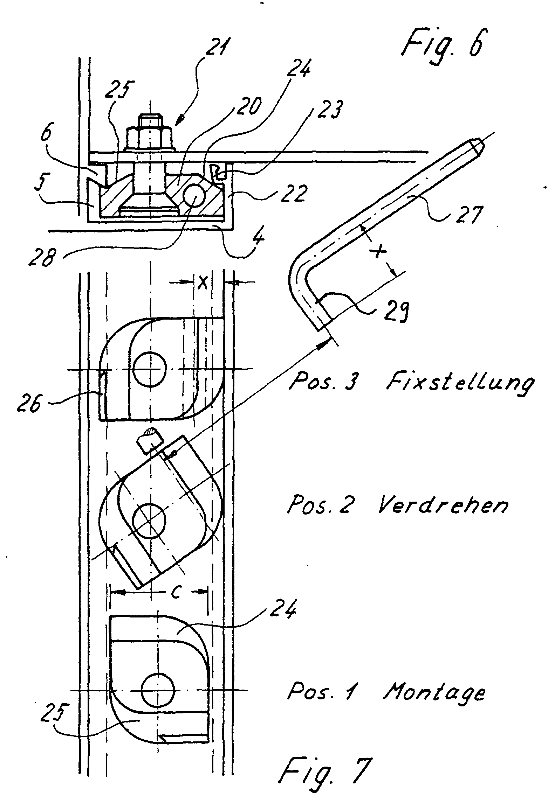

Ein Ausführungsbeispiel der Verbindungsvorrichtung ist in den Fig. 2 bis 5 aufgezeigt, während eine zweite Ausführungsform der Verbindungsvorrichtung Gegenstand der Figuren 6 bis 9 ist.

Der mit dem Anlageschenkel 3 einstückige Prismensteg 6, der eine Randleiste der hinterschnittenen Nut 5 bildet, weist die Schrägfläche 6.1 auf, die vorzugsweise unter einem Winkel 30° bis 60° zur horizontalen oder vertikalen Ebene geneigt ist, wobei die Ebene sich durch die Scheitellinie der Schrägfläche erstreckt. Über diese Winkelneigung kann die wirksame Anpreßkraft des Sparrenprofils 2 an den Anlageschenkel 3 des Profilträgers 1 beeinflußt werden.

In der unteren Profilwandung 7 des Sparrenprofiles 2 ist der Achsbolzen 8 als Stufenbolzen in einer Durchgangsbohrung angeordnet. Mittels einer Gewindemutter 9 ist der Achsbolzen kraftschlüssig unter Zuhilfenahme üblicher Schraubensicherungen, wie z.B. Federringe, festgelegt. Der Achsbolzen ist mit einem Zylinderschaft 10 ausgerüstet, der in die Nut 5 des Profilträgers hineinragt. Am unteren Ende weist der Zylinderschaft eine mittige Radialbohrung auf, in der ein Stift 11 in Form eines Schwerspannstiftes oder Zylinderstiftes eingesetzt ist, wobei der Stift 11 den Zylinderschaft 10 zu beiden Seiten hin überragt.

In der Montageposition der Verbindungsvorrichtung verläuft der Stift 11 quer zur Längsachse des Sparrenprofils 2 bzw. parallel zur Längsachse des Profilträgers 1. Oberhalb des Stiftes 11 ist eine Hebelplatte 12 angeordnet, die ein Langloch 13 aufweist, durch das sich der Zylinderschaft 10 erstreckt. Die Breite des Langlochs 13 ist ein wenig größer als der Durchmesser des Zylinderschafts 10. Die Stirnenden des Langloches 13 sind entsprechend der Kontur des Zylinderschafts halbkreisförmig ausgebildet. Die Hebelplatte 12 liegt auf dem Stift 11 auf.

An der dem Prismensteg 6 zugewandten Längskante weist die Hebelplatte 12 eine Aufkantung 14 auf, die mit der Schrägfläche 6.1 des Prismenstegs zusammenwirkt.

Die Aufkantung 14 kann dem Verlauf der Schrägfläche 6.1 flächig angepaßt sein. Es ist aber auch denkbar, daß die mit der Schrägfläche 6.1 des Prismensteges 6 zusammenwirkende Fläche der Aufkantung eine oder mehrere Profilierungen aufweist. Die Profilierung kann z.B. als halbkreisförmiger Vorsprung ausgebildet sein.

An der anderen Seite der Hebelplatte ist in dem dargestellten Ausführungsbeispiel eine nach aufwärts gerichtete Aufkantung 15 angeordnet. Auf diese Aufkantung ist ein Klemmprofil 16 aufgesetzt. Dieses Klemmprofil ist an seinen beiden Enden mit Gewindestiften 17 ausgerüstet, die unabhängig von Toleranzen ein Verspannen der Hebelplatte 12 mit dem Sparrenprofil 2 bewirken, wobei sich das Klemmprofil 16 an der unteren Profilwandung 7 des Sparrenprofiles 2 abstützt.

Zur eindeutigen Lage und Führung ist das Klemmprofil 16 mit parallel verlaufenden Randleisten 18 ausgestattet, die die Aufkantung 15 der Hebelplatte 12 teilweise umgreifen.

Aus der Fig. 2 ergibt sich, daß die äußere Randleiste mit einer winkelförmigen Leiste 19 verlängert sein kann, die dazu dient, das Klemmprofil 16 vor der Montage unverlierbar an der Hebelplatte 12 mittels der Gewindestifte 17 festzulegen, so daß sich eine Montageeinheit ergibt.

Aus der Fig. 3 kann man entnehmen, daß sowohl die Hebelplatte 12 als auch das Klemmprofil 16 länger sind als die Breite des Sparrenprofils 2. Hierdurch sind die Gewindestifte 17 für die Montage, und zwar zur Erzielung des Klemmvorganges nach dem Ausrichten des Sparrenprofils mit einem entsprechenden Werkzeug zugänglich.

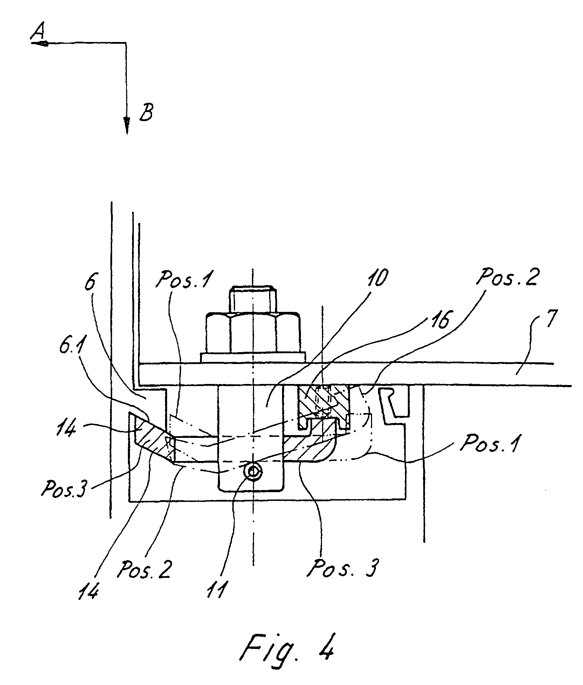

Die einzelnen Schritte des Montagevorganges können anhand der Fig. 4 erläutert werden.

Der Stift 11 bildet für die Hebelplatte 12 das Auflager und die Kippachse für die Montage dieser Hebelplatte.

Die Position 1 zeigt die Hebelplatte 12 in der zurückgezogenen Stellung. Die Hebelplatte liegt im Bereich des freien Durchgangs bzw. der Öffnung der hinterschnittenen Nut 5. Aus der Fig. 2 ist zu entnehmen, daß die Breite der Hebelplatte 12 durch den Buchstaben C gekennzeichnet ist. Dieses Maß C ist geringfügig kleiner als die Weite der Öffnung der Nut 5, die mit dem Buchstaben N gekennzeichnet ist. Die am Sparrenprofil 2 festgelegte, in dem Langloch 13 verschiebbar gelagerte Hebelplatte 12 kann somit in die Nut 5 eingebracht werden. Durch Schwenken oder Kippen der Hebelplatte 12 in die Position 2 gemäß der Fig. 4 kann die Aufkantung 14 unter den Prismensteg 6 geführt werden, so daß dann die Hebelplatte 12 die endgültige Montageposition 3 einnehmen kann.

Entscheidend ist, daß die Stirnseite des Langlochs 13 der Hebelplatte 12 auf der dem Prismensteg 6 abgewandten Seite an dem Zylinderschaft 10 des Achsbolzens 8 zur Anlage kommt.

Nach dem Aufschieben des Klemmprofiles 16 auf die Aufkantung 15 und nach dem Einnehmen der Lage des Klemmprofils, die in der Fig. 3 dargestellt ist, werden die Gewindestifte 17 angezogen, so daß die Funktionsteile die Verriegelungsstellung einnehmen.

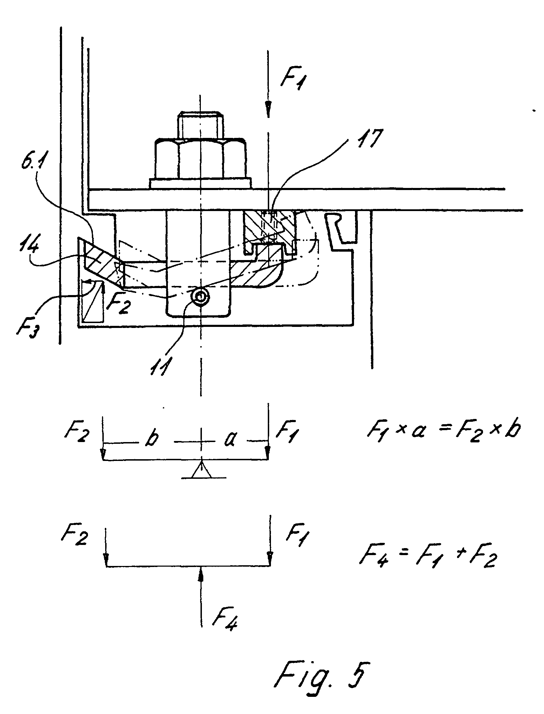

Die Fig. 5 zeigt den Kräfteverlauf und die Wirkungsweise dieser Verbindung. Über den Gewindestift 17 wird die Kraft F₁ auf die Hebelplatte 12 ausgeübt, die sich auf dem Stift 11 abstützt. Aufgrund der Hebelwirkung um den Stift 11 als Drehachse bewirkt die Kraft F₁ eine Reaktionskraft F₂ der Aufkantung 14 an der Schrägfläche 6.1. Während die Reaktionskraft F₂ gleichzeitig die Klemmkraft für das Auflager des Sparrenprofils 2 auf dem Auflageschenkel 4 des Profilträgers 1 ist, bewirkt diese Kraft F₂ an der Schrägfläche eine Horizontalkraft F₃, mit der das Sparrenprofil 2 horizontal an den Anlageschenkel 3 des Profilträgers 1 angepreßt wird. Voraussetzung für diese Wirkung ist jedoch, daß das Langloch 13 mit der dem Prismensteg abgewandten Stirnseite am Zylinderschaft 10 des Achsbolzens 8 anliegt.

Entsprechend den Fluchtlinien der einzelnen Bauteile ist unter der Fig. 5 das wirksame Hebelprinzip mit Angabe der sich ergebenden Kräfte dargestellt.

Die Figur 6 zeigt einen in die Nut 5 eindrehbaren Verbinder in seiner Montageendlage. Die Verbinderplatte 20 ist an einem stufigen Achsbolzen 21 drehbar gelagert, der mittels eines Gewindeabsatzes und einer Gewindemutter an der unteren Wandung 7 des Sparrenprofiles 2 festgelegt ist.

In der Endposition, also in der Position 3 nach der Fig. 7, stützt sich die Verbinderplatte 20 an der Nutbegrenzungswand 22 der Nut 5 des Auflageschenkel 4 des Profilträgers 1 ab und untergreift mit einer Schrägfläche 24 einen Nutsteg 23, der eine Randleiste der hinterschnittenen Nut 5 bildet.

An der gegenüberliegenden Seite untergreift eine weitere Schrägfläche 25 der Verbinderplatte 20 den Prismensteg 6, wobei durch die Schrägflächen ein Anzug des Sparrenprofils 2 auf den Auflagerschenkel 4 erfolgt.

Durch die Anlage der Verbinderplatte 20 am Nutbegrenzungssteg 22 wird über eine Exzenterausbildung der Verbinderplatte 20 das Sparrenprofil 2 auch gegen den Anlageschenkel 3 des Profilträgers 1 gepreßt.

Die Lagefixierung der eingedrehten Verbinderplatte 20 erfolgt durch eine Rastkante 26, die den Prismensteg 6 untergreift.

In der Fig. 7 die einzelnen Montagepositionen der Verbinderplatte 20 dargestellt.

Hieraus kann man entnehmen, daß die Verbinderplatte 20 eine Breite C aufweist, die geringer ist als die lichte Weite der hinterschnittenen Nut 5 bzw. der Breite der Öffnung der Nut 5, so daß der am Sparrenprofil 2 vormontierte Verbinder in die Nut 5 eingeführt werden kann.

In Drehrichtung sind an der Verbinderplatte 20 gegenüberliegend exzentrische Kurven angeordnet, denen die Schrägflächen 24 und 25 zugeordnet sind.

Von der Montageposition 2 wird die Verbinderplatte 20 z.T. mittels eines winkelförmigen Montageschlüsses 27, der in eine Montagebohrung 28 der Montageplatte eingesetzt werden kann, in die Position 3 verstellt.

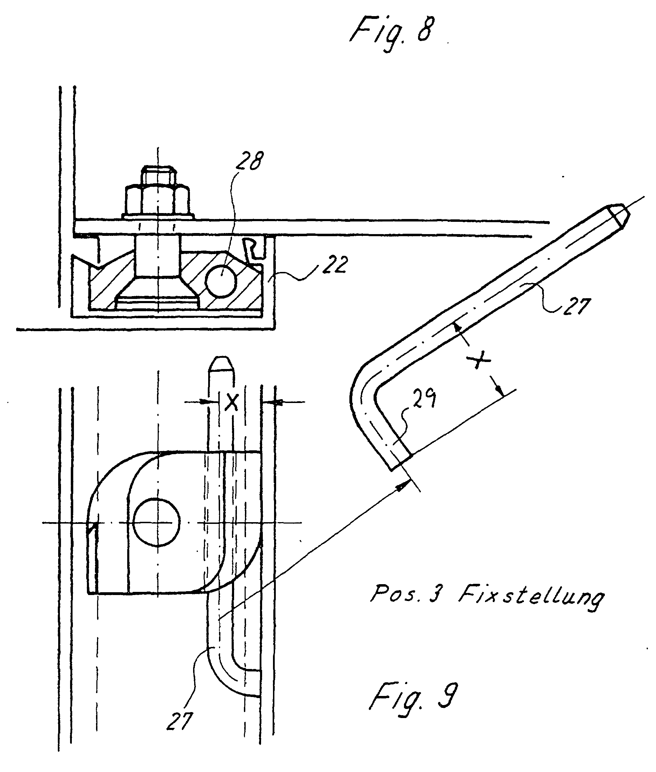

Die Figuren 8 und 9 zeigen nochmals die Endposition der Verbindungsvorrichtung, wobei in der Fig. 9 dargestellt ist, daß der winkelförmige Montageschlüssel 27 als zusätzliche Lagesicherung der Verbinderplatte 20 verwendet werden kann. Der Schenkel 29 des Montageschlüssels 27 weist eine Länge auf, die geringfügig größer ist als das Abstandsmaß der Montagebohrung 28 zur Nutbegrenzungswand 22, so daß der Montageschlüssel 27 mit seinem längeren Schenkel in die Montagebohrung 28 eingeschoben werden kann. Die Stirnfläche des kürzeren Schenkel 29 kommt an der Nutbegrenzungswand 22 zur Anlage. Hierdurch wird die Lage der Verbinderplatte 20 dauerhaft gesichert. Das Abstandsmaß zwischen der Montagebohrung 28 und der Nutbegrenzungwand 22 ist mit dem Buchstaben X gekennzeichnet.

## Patentansprüche

1. Vorrichtung zum Verbinden eines mit einem Auflagerschenkel (4) versehenen Profilträgers (1) mit einem aufgelagerten Profil, z.B. einem Sparrenprofil (2), wobei der Auflagerschenkel (4) eine hinterschnittene, einen mehrteiligen Verbinder aufnehmende Nut (5) aufweist, **dadurch gekennzeichnet, daß** der mehrteilige Verbinder eine Montageeinheit bildet, die mittels eines Achsbolzens (8,21) an dem aufgelagerten Profil (2) festgelegt in die Nut (5) des Auflagerschenkels (4) einführbar ist und eine Verbinderplatte (12,20) aufweist, die zu dem Achsbolzen (8) bis zu einer Anlage verschiebbar und um ein achsbolzenfestes Bauteil kippbar oder um den Achsbolzen (8,21) drehbar ist und in der Verriegelungsstellung mindestens eine hinterschnittene Fläche der Nut (5) hintergreift.

2. Verbindungsvorrichtung nach Anspruch 1, **dadurch gekennzeichnet, daß** die Verbinderplatte (12,20) im Zusammenwirken mit dem Achsbolzen (8,21) in der Verriegelungsstellung das aufgelagerte Profil (2) auf den Auflagerschenkel (4) und die Stirnseite des Profils (2) gegen einen Anlageschenkel (3) des Trägerprofils (1) preßt.

3. Verbindungsvorrichtung nach Anspruch 2, bei der der Anlageschenkel (3) des Profilträgers(1) mit einem Prismensteg (6) versehen ist, der eine Längsrandleiste der hinterschnittenen Nut (5) des Auflagerschenkels (4) bildet, **dadurch gekennzeichnet, daß** der Achsbolzen (8) einen sich durch ein Langloch (13) einer die Verbinderplatte bildenden Hebelplatte (12) erstreckenden Zylinderschaft (10) aufweist und am unteren Ende des Zylinderschaftes (10) ein sich quer zur Längsachse des Zylinderschafts (10) bzw. parallel zur Längsachse des Profilträgers (1) erstreckender Stift (11) festgelegt ist, auf dem die Hebelplatte (12) aufliegt, die an der dem Prismensteg (6) zugewandten Seite mit einer die Schrägfläche (6.1) des Prismenstegs hintergreifenden Aufkantung (14) versehen und in der bzw. vor der Verriegelungsstellung eine Stirnseite des Langlochs (13) am Zylinderschaft (10) anliegt und an dem der Aufkantung (14) abgewandten Ende die Hebelplatte (12) mit einer Spannkraft belastet ist.

4. Verbindungsvorrichtung nach Anspruch 3, **dadurch gekennzeichnet, daß** die Aufkantung (14) eine Schrägfläche aufweist, die entsprechend der Schrägfläche (6.1) des Prismenstegs (6) ausgerichtet ist.

5. Verbindungsvorrichtung nach Anspruch 3, **dadurch gekennzeichnet, daß** die mit der Schrägfläche (6.1) des Prismenstegs (6) zusammenwirkende Fläche der Aufkantung (14) eine oder mehrere Profilierungen aufweist.

6. Verbindungsvorrichtung nach einem der Ansprüche 3 bis 5, **dadurch gekennzeichnet, daß** die Hebelplatte (12) an der der Aufkantung (14) abgewandten Seite mit einer Aufkantung (15) versehen ist, auf die ein Klemmprofil (16) gesetzt ist, das Gewindestifte (17) aufweist, die auf die Aufkantung (15) wirken und daß die Hebelplatte (12) und das Klemmprofil (16) das aufgelagerte Profil (2) seitlich überragen und die Gewindestifte im überragenden Bereich angeordnet sind.

7. Verbindungsvorrichtung nach einem der Ansprüche 3 bis 6, **dadurch gekennzeichnet, daß** die Breite C der Hebelplatte (12) geringfügig kleiner ist als die Weite N der Öffnung der Nut (5).

8. Verbindungsvorrichtung nach Anspruch 3, **dadurch gekennzeichnet, daß** die Breite des Langlochs (13) ein wenig größer ist als der Durchmesser des Zylinderschafts (10) und die Stirnenden des Langloches (13) entsprechend der Kontur des Zylinderschafts halbkreisförmig ausgebildet sind.

9. Verbindungsvorrichtung nach Anspruch 6, **dadurch gekennzeichnet, daß** das Klemmprofil (16) mit Randleisten (18) ausgerüstet ist, die die Aufkantung (15) der Hebelplatte (12) teilweise umgreifen.

10. Verbindungsvorrichtung nach Anspruch 9, **dadurch gekennzeichnet, daß** die äußere Randleiste (18) um eine winkelförmige Leiste (19) verlängert ist, die mit ihrem unteren Schenkel die Hebelplatte (12) untergreift.

11. Verbindungsvorrichtung nach Anspruch 3, **dadurch gekennzeichnet, daß** der Stift (11) in eine mittige Radialbohrung des Zylinderschaftes (10) eingesetzt ist und den Zylinderschaft (10) beidseitig überragt.

12. Verbindungsvorrichtung nach Anspruch 1 oder 2, **dadurch gekennzeichnet, daß** der Achsbolzen als stufiger Achsbolzen (21) ausgebildet ist und die um den Achsbolzen drehbar gelagerte Verbinderplatte (20) eine Breite c aufweist, die kleiner ist als die Öffnungsweite der Nut (5), und daß in Drehrichtung der Verbinderplatte (20) gegenüberliegend, exzenterische Kurven angeordnet sind, die Schrägflächen (24) bzw. (25) aufweisen, die auf dem Weg der Verbinderplatte (20) in die Verriegelungsstellung und in der Verriegelungsstellung einen Nutsteg (23) und den Prismensteg (6) hintergreifen, wobei durch die Schrägflächen im Zusammenwirken mit den Nutstegen ein Anzug des aufgelagerten Profils (2) auf den Auflagerschenkel (4) des Profilträgers (1) erfolgt.

13. Verbindungsvorrichtung nach Anspruch 12, **dadurch gekennzeichnet, daß** die Verbinderplatte (12) auf dem Weg in die Verriegelungsstellung sich am Nutbegrenzungssteg (22) abstützt und den Anlageschenkel (3) des Profilträgers (1) gegen die Stirnfläche des auflagernden Profils (2) preßt.

14. Verbindungsvorrichtung nach Anspruch 12 oder 13, **dadurch gekennzeichnet, daß** zur Lagefixierung der in die Verriegelungsstellung eingedrehten Verbinderplatte (20) eine Rastkante (26) der Verbinderplatte den Prismensteg (6) untergreift.

15. Verbindungsvorrichtung nach einem der Ansprüche 12 bis 14, **dadurch gekennzeichnet, daß** die Verbinderplatte (20) eine Montagebohrung (28) zur Aufnahme eines winkelförmigen Montageschlüssels (27) aufweist, durch den die Verbinderplatte in die Verriegelungsstellung drehbar ist.

16. Verbindungsvorrichtung nach Anspruch 15, **dadurch gekennzeichnet, daß** zur Lagesicherung der Verbinderplatte (20) in der Verriegelungsstellung der lange Schenkel des Montageschlüssels (27) in die Montagebohrung (28) einführbar und der kurze Schenkel dem Nutsteg (22) zugewandt liegt, wobei die Stirnfläche des kurzen Schenkels an dem Nutsteg (22) anliegt.

## Claims

1. Device for connecting a profile carrier (1) provided with a support leg (4) to a supported profile, for example a rafter profile (2), the support leg (4) having an undercut groove (5) receiving a multi-part connector, **characterised in that** the multi-part connector forms an assembly unit which, when fastened to the supported profile (2) by means of an axial stud (8, 21) can be inserted into the groove (5) of the support leg (4) and has a connecting plate (12, 20) which can be displaced relative to the axial stud (8) up to a contact arrangement and can be tilted about a component fixed to the axial stud or can be rotated about the axial stud (8, 21) and, in the locking position, engages at least behind an undercut face of the groove (5).

2. Connecting device according to claim 1, **characterised in that** the connecting plate (12, 20), in co-operation with the axial stud (8, 21) in the locking position, presses the supported profile (2) onto the support leg (4) and the end face of the profile (2) against a contact leg (3) of the carrier profile (1).

3. Connecting device according to claim 2, in which the contact leg (3) of the profile carrier (1) is provided with a prism web (6) which forms a longitudinal edge strip of the undercut groove (5) of the support leg (4), **characterised in that** the axial stud (8) has a cylindrical shaft (10) which extends through a slot (13) of a lever plate (12) forming the connecting plate and, at the lower end of the cylindrical shaft (10), a pin (11) is fixed which extends transverse to the longitudinal axis of the cylindrical shaft (10) or parallel to the longitudinal axis of the profile carrier (1), on which pin (11) the lever plate (12) rests which is provided on the side facing the prism web (6) with an edging (14) engaging behind the inclined face (6.1) of the prism web and, in the locking position, or upstream from the locking positions an end face of the slot (13) rests on the cylindrical shaft (10) and the lever plate (12) is loaded with a tensioning force at the end remote from the upturn (14).

4. Connecting device according to claim 3, **characterised in that** the upturn (14) has an inclined face which is aligned in accordance with the inclined face (6.1) of the prism web (6).

5. Connecting device according to claim 3, **characterised in that** the face of the upturn (14) co-operating with the inclined face (6.1) of the prism web (6) has one or more profilings.

6. Connecting device according to any one of claims 3 to 5, **characterised in that** the lever plate (12) is provided with an upturn (15) on the side remote from the upturn (14), on which upturn (15) is placed a clamping profile (16) which has threaded pins (17) which act on the upturn (15) and **in that** the lever plate (12) and the clamping profile (16) project laterally beyond the supported profile (2) and the threaded pins are arranged in the projecting region.

7. Connecting device according to any of clams 3 to 6, **characterised in that** the width C of the lever plate (12) is slightly smaller than the width N of the aperture of the groove (5).

8. Connecting device according to claim 3, **characterised in that** the width of the slot (13) is slightly larger than the diameter of the cylindrical shaft (10) and the end faces of the slot (13) are formed in a semi-circular shape in accordance with the contour of the cylindrical shaft.

9. Connecting device according to claim 6, **characterised in that** the clamping profile (16) is equipped with edge strips (18) which partially enclose the upturn (15) of the lever plate (12).

10. Connecting device according to claim 9, **characterised in that** the outermost edge strip (18) is elongated by an angular strip (19) which engages with its lower leg below the lever plate (12).

11. Connecting device according to claim 3, **characterised in that** the pin (11) is inserted into a central radial bore of the cylindrical shaft (10) and projects beyond the cylindrical shaft (10) on the two sides.

12. Connecting device according to claim 1 or 2, **characterised in that** the axial stud is designed as a stepped axial stud (21) and the connecting plate (20) which is rotatably mounted about the axial stud has a width c which is smaller than the aperture width of the groove (5) and **in that** opposing eccentric curves are arranged in the direction of rotation of the connecting plate (20), which curves have inclined faces (24) or (25) which on the path of the connecting plate (20) into the locking position and in the locking position engage behind a groove web (23) and the prism web (6), a slope of the supported profile (2) toward the support leg (4) of the profile carrier (1) occurring owing to the inclined faces in co-operation with the groove webs.

13. Connecting device according to claim 12, **characterised in that** the connecting plate (12) on the path into the locking position is supported on the groove limiting web (22) and presses the contact leg (3) of the profile carrier (1) against the end face of the supported profile (2).

14. Connecting device according to claim 12 or 13, **characterised in that** to secure the position of the connecting plate (20) rotated into the locking position, a latching edge (26) of the connecting plate engages below the prism web (6).

15. Connecting device according to any one of claims 12 to 14, **characterised in that** the connecting plate (20) has a fitting bore (28) to receive an angular fitting key (27) by means of which the connecting plate can be rotated into the locking position.

16. Connecting device according to claim 15, **characterised in that** to secure the position of the connecting plate (20) in the locking position, the long leg of the fitting key (27) can be inserted into the fitting bore (28) and the short leg faces the groove web (22), the end face of the short leg resting on the groove web (22).

## Revendications

1. Dispositif destiné à assembler un support profilé (1) muni d'une aile d'appui (4), avec un profilé en appui, tel qu'un profilé à chevrons (2), l'aile d'appui (4) étant munie d'une rainure (5) en contre-dépouille, dans laquelle est logée une pièce d'assemblage en plusieurs parties, **caractérisé en ce que** la pièce d'assemblage en plusieurs parties forme une unité de montage, qui peut être insérée dans la rainure (5) de l'aile d'appui (4) et fixée au moyen d'un boulon axial (8, 21) contre le profilé en appui (2), et comporte une plaque d'assemblage (12, 20), qui peut coulisser vers le boulon axial (8) jusqu'à entrer en contact avec celui-ci et qui peut basculer autour d'une partie fixe du boulon axial ou peut tourner autour du boulon axial (8, 21) et, dans la position verrouillée, s'engage derrière au moins une surface en contre-dépouille de la rainure (5).

2. Dispositif d'assemblage selon la revendication 1, **caractérisé en ce que**, dans la position de verrouillage, la plaque d'assemblage (12, 20), par action conjointe avec le boulon axial (8, 21), pousse le profilé en appui (2) contre l'aile d'appui (4) et pousse la face frontale du profilé (2) contre une aile de contact (3) du profilé de support (1).

3. Dispositif d'assemblage selon la revendication 2, dans lequel l'aile de contact (3) du support profilé (1) est munie d'une branche prismatique (6), qui forme un rebord longitudinal de la rainure (5) en contre-dépouille, réalisée dans l'aile d'appui (4), **caractérisé en ce que** le boulon axial (8) comporte une tige cylindrique (10) qui passe à travers un trou oblong (13) d'une plaque à levier (12) formant la plaque d'assemblage, et sur l'extrémité inférieure de la tige cylindrique (10) est fixée une broche (11), qui s'étend transversalement à l'axe longitudinal de la tige cylindrique (10), à savoir parallèlement à l'axe longitudinal du support profilé (1), sur laquelle vient en appui la plaque à levier (12) qui est munie, sur le côté orienté vers la branche prismatique (6), d'un bord replié vers le haut (14) s'engageant derrière la face inclinée (6.1) de la branche prismatique, et, dans la position de verrouillage ou avant la position de verrouillage, une face frontale du trou oblong (13) est en appui contre la tige cylindrique (10) et, sur son extrémité opposée au bord replié vers le haut (14), la plaque à levier (12) est sollicitée par une force de serrage.

4. Dispositif d'assemblage selon la revendication 3, **caractérisé en ce que** le bord replié vers le haut (14) comporte une surface inclinée qui est orientée dans le même sens que la surface inclinée (6.1) de la branche prismatique (6).

5. Dispositif d'assemblage selon la revendication 3, **caractérisé en ce que** la surface du bord replié vers le haut (14), coopérant avec la surface inclinée (6.1) de la branche prismatique (6), comporte un ou plusieurs profilages.

6. Dispositif d'assemblage selon l'une des revendications 3 à 5, **caractérisé en ce que** la plaque à levier (12), sur le côté opposé au bord replié vers le haut (14), est munie d'un bord coudé vers le haut (15), sur lequel est posé un profilé de blocage (16), qui comporte des tiges filetées (17) qui agissent sur le bord coudé vers le haut (15) et **en ce que** la plaque à levier (12) et le profilé de blocage (16) s'avancent latéralement au-dessus du profilé en appui (2) et les tiges filetées sont disposées dans la zone en saillie.

7. Dispositif d'assemblage selon l'une des revendications 3 à 6, **caractérisé en ce que** la largeur C de la plaque à levier (12) est légèrement inférieure à la largeur N de l'ouverture de la rainure (5).

8. Dispositif d'assemblage selon la revendication 3, **caractérisé en ce que** la largeur du trou oblong (13) est légèrement supérieure au diamètre de la tige cylindrique (10) et les extrémités frontales du trou oblong (13) ont une forme semi-circulaire correspondant au contour de la tige cylindrique.

9. Dispositif d'assemblage selon la revendication 6, **caractérisé en ce que** le profilé de blocage (16) est muni de rebords (18), qui entourent partiellement le bord coudé vers le haut (15) de la plaque à levier (12).

10. Dispositif d'assemblage selon la revendication 9, **caractérisé en ce que** le rebord extérieur (18) se prolonge par une baguette angulaire (19), dont la branche inférieure s'engage en dessous de la plaque à levier (12).

11. Dispositif d'assemblage selon la revendication 3, **caractérisé en ce que** la broche (11) est insérée dans une forure radiale centrale de la tige cylindrique (10) et dépasse sur les deux côtés de la tige cylindrique (10).

12. Dispositif d'assemblage selon la revendication 1 ou 2, **caractérisé en ce que** le boulon axial est réalisé sous forme de boulon axial étagé (21) et la plaque d'assemblage (20) logée de manière à tourner autour du boulon axial a une largeur c inférieure à la largeur de l'ouverture de la rainure (5), et **en ce que** dans le sens de rotation de la plaque d'assemblage (20) sont disposées des cames excentriques situées face à face, qui comportent des faces inclinées (24) et (25), qui s'engagent derrière une paroi de la rainure (23) et derrière la branche prismatique (6) lorsque la plaque d'assemblage (20) se déplace vers la position de verrouillage ou est dans la position de verrouillage, sachant que, par l'action conjointe des surfaces inclinées avec les parois de la rainure, le profilé en appui (2) est serré contre l'aile d'appui (4) du support profilé (1).

13. Dispositif d'assemblage selon la revendication 12, **caractérisé en ce que**, pendant son déplacement vers la position de verrouillage, la plaque d'assemblage (12) vient en appui contre la paroi de délimitation de la rainure (22) et serre l'aile de contact (3) du support profilé (1) contre la face frontale du profilé en appui (2).

14. Dispositif d'assemblage selon la revendication 12 ou 13, **caractérisé en ce qu'**une arête de blocage (26) de la plaque d'assemblage s'engage en dessous de la branche prismatique (6), afin de bloquer la plaque d'assemblage (20) dans sa position de verrouillage.

15. Dispositif d'assemblage selon l'une des revendications 12 à 14, **caractérisé en ce que** la plaque d'assemblage (20) est munie d'une forure de montage (28) destinée à recevoir une clé de montage (27) angulaire, par laquelle on peut faire tourner la plaque d'assemblage dans sa position de verrouillage.

16. Dispositif d'assemblage selon la revendication 5, **caractérisé en ce que**, pour garantir la position de la plaque d'assemblage (20) dans la position de verrouillage, la branche longue de la clé de montage (27) peut être insérée dans la forure de montage (28) et la branche courte est orientée vers la paroi de la rainure (22), la face frontale de la branche courte étant en appui contre la paroi de la rainure (22).
